# EUROPÄISCHE PATENTANMELDUNG

(11) **EP 0 557 823 A1**
(43) Veröffentlichungstag der Anmeldung: **01.09.1993**
(21) Anmeldenummer: 93102225.5
(22) Anmeldetag: 12.02.1993
(51) Int. Cl.: H02G 3/28, E04F 15/024

(54) **Vorrichtung zum Festhalten von Abdeckplatten eines Kabelzwischenbodens**

(30) Priorität: 12.02.1992 DE 4204072
(71) Anmelder: Bobka, Wilhelm, D-90518 Altdorf (DE)
(72) Erfinder: Bobka, Wilhelm, D-90518 Altdorf (DE)

(57) **Zusammenfassung**

Die Vorrichtung dient der Arbeitssicherheit bei aufgedeckten Kabelzwischenböden aller Art. Sie hält freie Bodenplatten fest und verhindert das Verrutschen der Platten. Dadurch werden Stolper-, Rutsch-, und Sturzgefahren vermieden. Die Vorrrichtung gewährleistet einen sicheren Stand bei aufgedeckten Kabelzwischenböden.

Sie besteht aus einem gewinkelten Kunststoffprofil Teil (1) mit zwei Rechteck-Haftmagneten (2) in waagrechter Anordnung an der Oberseite und zwei Rund-Haftmagneten (3) in senkrechter Anordnung an dem Seitenprofil.

Zum Ausgleich bei nicht mittig verlegten Abdeckplatten können mit zwei Zylinderschrauben mit Innensechskant (6) und zwei Distanzblechen (7) der Abstand von der Vorrichtung zu den Abdeckplatten von 22 bis einschließlich 40 mm angeglichen werden.

## Beschreibung

Die Erfindung betrifft eine Vorrichtung zum Festhalten von an einen aufgedeckten Bereich eines Kabelzwischenbodens angrenzenden Abdeckplatten in elektrischen. Schalträumen, Prozeßleitwarten, Schaltwarten, Rechen- und Informationszentren.

Bei Arbeiten in Kabelzwischenböden, wie sie beispielsweise aus der DE - OS 2117721 bekannt sind, wurden bisher die erforderlichen Abdeckplatten von der Unterkonstruktion entfernt und zur Seite gestellt. Diese vorstehend beschriebenen Kabelzwischenböden beinhalten jedoch den Nachteil, daß nach dem Abnehmen einzelner Abdeckplatten die spitzen Stifte hervortreten und zusätzliche Unfallgefahren bilden, wie z.B. Stolpern, Verletzungsgefahren beim Auftreten oder Aufstützen, während des Ein- und Aussteigens oder beim Kabelziehen.Darüberhinaus sind die beschriebenen Vorrichtungen für Kabelzwischenböden viel zu aufwendig und von den Kosten her nicht realisierbar. Es müßten sämtliche Abdeckplatten an allen Seiten Bohrungen erhalten und danach müßten Hülsen eingebaut werden. In der Unterkonstruktion (Vierkantprofile) müßten ebensoviele Bohrungen mit Gewinde zur Aufnahme der Stifte montiert werden.

Aus den o.a. Gründen werden daher in der Praxis nur glatte Vierkantprofile für die Unterkonstruktion verwendet, auf denen die Abdeckplatten lose verlegt werden. Diese werden dann bei Bedarf herausgenommen und zur Seite gestellt. Die nun nach mindestens einer Seite von dem abgedeckten Bereich noch verbleibenden Abdeckplatten auf der Unterkonstruktion haben durch die Herausnahme der Platten an der Arbeitstelle keine Verspannung mehr und fangen an zu rutschen. Insbesondere wenn Handwerker über die losen Abdeckplatten gehen, besteht die Gefahr von Unfällen, bei denen Personen in den aufgedeckten Kabelzwischenboden stürzen und sich empfindlich verletzen können.

Der Erfindung liegt die Aufgabe zugrunde, eine Vorrichtung gemäß dem Oberbegriff des Patentanspruchs 1 zu entwickeln, durch die die Unfallgefahr in Verbindung mit einem abgedeckten Bereich eines Kabelzwischenbodens wesentlich vermindert ist.

Diese Aufgabe wird durch die im kennzeichnenden Teil des Patentanspruchs 1 angegebenen Merkmale gelöst.

Besondere Ausführungsarten der Erfindung sind Gegenstand der Patentansprüche 2 und 3.

Die erfindungsgemäße Vorrichtung kann sehr schnell mit ihren Magneten man dem genormten Vierkantprofil (60 x 60mm) der metallischen Unterkonstruktion eines Kabelzwischenbodens metallischen Unterkonstruktion eines Kabelzwischenbodens festgelegt werden, wobei der eine Schenkel der Vorrichtung nicht dicker als die Abdeckplatten (28mm) ausgebildet ist.

Die Anordnung von Zylinderschrauben und Distanzblechen am einen Schenkel des Winkelprofils gemäß dem Anspruch 3 ist besonders dann vorteilhaft, wenn die zu haltenden Abdeckplatten nicht mittig auf dem Vierkantprofil der Unterkonstrukion angeordnet sind.

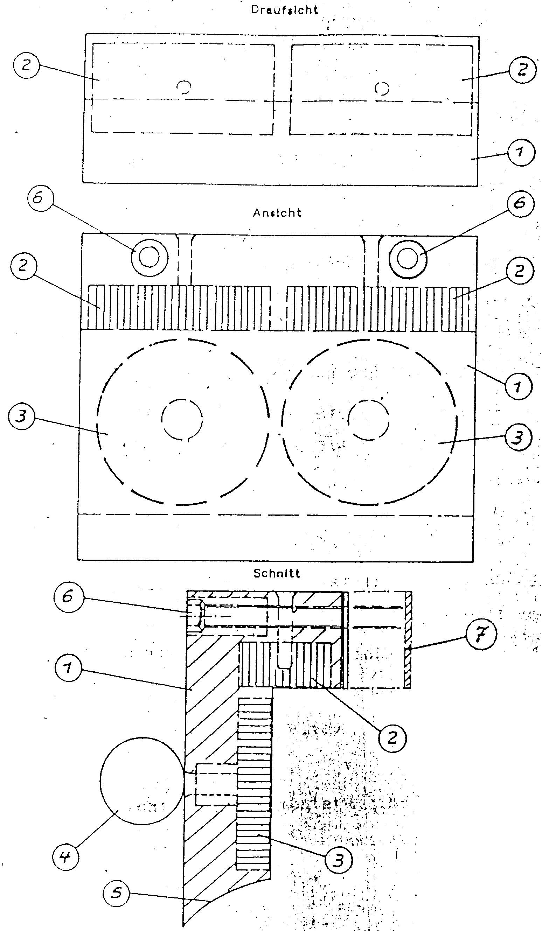

Die erfindungsgemäße Vorrichtung ist in der Zeichnung in der Draufsicht, Ansicht und im Querschnitt dargestellt und besteht in einem Stück aus einem PVC-Winkelprofil 1 mit zwei Rechteck-Haftmagneten 2 an der Oberseite und zwei Rund-Haftmagneten 3 an der Seite.

Zur leichteren Montage und Demontage sind an den beiden Rundmagneten 3 nach außen zwei Kunststoff-Kugelköpfe 4 angebracht. Außerdem ist an der Innenseite eine Griffleiste 5 zum leichteren Abziehen angeordnet.

Zur Verstellbarkeit der Vorrichtung ragen aus der Stirnseite des einen Profilschenkels 5 zwei Zylinderschrauben 6 hervor, an denen zwei Distanzbleche 7 angeordnet sind. Zur Verstellung des Abstandes der Distanzbleche 7 von der Stirnseite des Profilschenkels weisen die Zylinderschrauben an ihrem den Distanzblechen 7 abgewandten Ende einen Innensechskant auf.

Die Vorrichtung ist mit signalroter Warnfarbe gespritzt, damit sie und ihre Sicherheitsfunktion ins Auge fallen.

## Patentansprüche

1. Vorrichtung zum Festhalten von an einen aufgedeckten Bereich eines Kabelzwischenbodens angrenzenden Abdeckplatten in elektrischen Schalträumen, Prozeß-Leitwarten, Schaltwarten, Rechen- und Informationszentren, gekennzeichnet durch ein Winkelprofil (1), das an einer Ünterkonstruktion des Kabelzwischenbodens durch zwei rechteckige Haftmagnete (2) am einen Profilschenkel und zwei runde Haftmagnete (3) am anderen Profilschenkel befestigbar ist.

2. Vorrichtung nach Anspruch 1, dadurch gekennzeichnet, daß das Winkelprofil (1) zur leichteren Handhabung zwei Kugelköpfe (4) und eine Griffleiste (5) aufweist.

3. Vorrichtung nach Anspruch 1 oder 2, dadurch gekennzeichnet, daß aus der Stirnseite des einen Profilschenkels zwei Zylinderschrauben (6) hervorragen, an denen zwei Distanzbleche (7) angeordnet sind, und daß die Zylinderschrauben (6) an ihrem den Distanzblechen (7) abgewandten Ende zur Verstellung des Abstandes der Distanzbleche (7) von dieser Stirnseite einen Innersechskant aufweisen.
